# EUROPÄISCHE PATENTSCHRIFT

(11) **EP 2 325 054 B1**
(45) Veröffentlichungstag und Bekanntmachung des Hinweises auf die Patenterteilung: **03.04.2013**
(21) Anmeldenummer: 10466029.5
(22) Anmeldetag: 18.11.2010
(51) Int. Cl.: B60R 13/02

(54) **Dachhimmelverbindung eines Fahrzeugs**
Roof liner connection for a vehicle
Connexion de panneau de plafond pour un véhicule

(30) Priorität: 18.11.2009 CZ 20090768
(43) Veröffentlichungstag der Anmeldung: 25.05.2011
(73) Patentinhaber: Skoda Auto A.S., 293 60 Mladá Boleslav (CZ)
(72) Erfinder: Budinsky, Marek, 78832 Staré Mesto pod Sneznikem (CZ)

(56) Entgegenhaltungen:
- WO-A1-01/89882
- WO-A1-2009/121080
- GB-A- 2 076 103
- GB-A- 2 144 196

## Beschreibung

### Technisches Gebiet

Die Erfindung betrifft die Verbindung des Fahrzeugdachhimmels, der aus mehreren Teilen gebildet wird, wobei jeder Teil des Dachhimmels separat und zerlegbar zum Dachteil der Fahrzeugkarosserie im Innenraum befestigt werden kann und diese einzelne Dachhimmelteile gegenseitig mit einem Verbindungsmittel verbunden werden können.

### Bisheriger Stand der Technik

Fahrzeugdesign und -konstruktion sollten so entworfen sein, damit das Herausnehmen und Einlegen eines einteiligen Dachhimmels beim Fahrzeug mit eingebauter Frontscheibe auch über andere Öffnung beschädigungslos ermöglicht wird und zwar durch die Öffnung der Heckklappe oder der vorderen bzw. hinteren Seitentüren. Aus Konstruktionsgründen kann solche Bedingung unerfüllt bleiben und die Frontscheibe ausgebaut werden muss. Dies geschieht bei den Nacharbeiten während der Fahrzeugfertigung, wo der Dachhimmel aus dem Fahrzeug ausgebaut und herausgenommen und nach Beendigung der Reparatur der Dachhimmel wieder ins Fahrzeug eingelegt und eingebaut werden muss (wegen der Beschädigung des Dachhimmels, des Zugriffs aus dem Fahrzeuginnenraum zu den durch den Dachhimmel abgedeckten Komponenten, wie z.B. Antenne, Innenleuchte usw.) oder bei Reparaturen, die im Feld aus gleichen Gründen in gleicher Weise vorgenommen werden.

Da die Frontscheibe jedoch ein Sicherheitselement des Fahrzeuges darstellt, kann man sie nach dem Ausbau aus dem Fahrzeug nicht wieder einbauen, sondern eine neue Scheibe verwendet werden muss. Solche Vorgehensweise verlängert deutlich die Zeit für den Austausch des Dachhimmels und verteuert den ganzen Arbeitsschritt (zum Ausbau und Einbau der Frontscheibe muss der Preis der neuen Scheibe angerechnet werden).

Im Dokument DE102007008557 ist ein mehrteiliger Dachhimmel erwähnt. Die Lösung enthält zwar den Entwurf eines mehrteiligen Dachhimmels, jedoch die einzelnen Teile werden zusammengeklebt und so entsteht eine einteilige, nicht zerlegbare Einheit. Die gegenseitige Verbindung dieser Bestandteile erfolgt im Herstellungsprozess, wobei das Wesen des mehrteiligen Dachhimmels auf den Zeitraum vor der Verbindung noch bei der Anfertigung beschränkt wird.

Andere Lösung ist in DE19959543 beschrieben. Die Aufgabe hierbei ist, einen Fahrzeugdachhimmel zu schaffen, bei dem das Biegen oder Knicken der Teile des Dachhimmels ohne wesentlicher Ausdehnung oder Beschädigung der Deckschicht des Dachhimmels ermöglicht wird. Dieser Dachhimmel weist deshalb an gewünschten Stellen ausgestaltete Bruchlinien auf, an denen die seitlichen Dachhimmelteile umgeklappt oder umgelegt werden. Der Fahrzeugdachhimmel weist eine obere Basisstruktur auf, zu der in der Montagestellung der Dachmodul zugewandt ist. Diese Basisstruktur besteht aus einer Schaumschicht und einer aus Glasfasern gebildeten Ober- und Unterschicht, die auf der Schaumschicht sandwichartig angeordnet sind und so eine harte, feste und weitestgehend unbiegsame Struktur bilden. Der Fahrzeugdachhimmel weist auch seine, dem Fahrgastraum zugewandte Unterseite, die in der Basisstruktur eine Schaumunterlage aufweist. Der Dachhimmel ist als eine Innenraumverkleidung des Fahrzeugdaches ausgestaltet und weist zwei ausgewölbte Bereiche am vorderen und hinteren Ende quer über dem Himmel auf. Der vordere ausgewölbte Bereich dient zur Aufnahme von Sonnenblenden und der hintere ausgewölbte Bereich dient als Raum für die Kopffreiheit der Fahrzeuginsassen. Während der Montage, bei der der Dachmodul von oben in das Fahrzeugdach eingesetzt werden soll, sind beide Randbereiche des Dachhimmels biegsam oder klappbar. Diese Randbereiche des Dachhimmels sind wegen des Einsatzes in den Dachrahmen ausgestaltet, da die Öffnung des Dachrahmens kleiner als der Dachhimmel ist. Zu diesem Zweck enthält der Dachhimmel zwei längsverlaufende Bruchlinien, an denen die entsprechenden Randbereiche nach unten abklappbar sind.

Die Bruchlinien sind als Sicken in der oberen Basisstruktur ausgebildet, welche die obere Glasfaserschicht und Schaumschicht durchdringen, nicht jedoch die untere Glasfaserschicht. Aus dem oben genannten geht hervor, dass der Himmel geknickt wird und zusammen bleibt, d.h. die einzelnen Randbereiche vom Mittelteil des Himmels untrennbar sind und der Himmel also als einteilige Einheit ausgebildet ist. Dies erscheint bei einer Beschädigung eines Teils des Himmels als Nachteil, da der ganze Dachhimmel und nicht nur der beschädigte Dachhimmelteil ausgetauscht werden muss.

Die GB 2 144 196 A und die GB 2 076 103 A zeigen eine Verbindung zwischen mindestens zwei Elemente, die jeweils eine Rille aufweisen, wobei die mindestens zwei Elemente durch einen Profilteil, der in beide Rillen eingesetzt wird, verbunden werden. Die WO 2009/121080 A beschreibt eine Dachhimmelverbindung eines Fahrzeugdachhimmels nach dem Oberbegriff des Anspruchs 1.

### Darstellung der Erfindung

Die Aufgabe wird durch die Dachhimmelverbindung des Fahrzeugdachhimmels, der aus mehreren Teilen gebildet wird, wobei jeder Teil des Dachhimmels separat und zerlegbar zum Dachteil der Fahrzeugkarosserie im Innenraum befestigt werden kann, gelöst. Diese Verbindung wird an Rändern beider Dachhimmelteile im Anbindungsbereich dieser Teile von der beim eingebauten Dachhimmel unsichtbaren Rückseite des Dachhimmels gebildet.

Die Darstellung der Erfindung liegt darin, dass die Dachhimmelverbindung des Fahrzeugdachhimmels aus beiderseitig verwendbarer Profilleiste besteht, die eine Rille und einen Profilteil umfasst. Die Profilleiste wird in der Verbindung spiegelbildlich doppelt derart verwendet, dass die eine Ausführung der Profilleiste zum Rand des ersten Dachhimmelteils und die zweite Ausführung der Profilleiste zum Rand des zweiten Dachhimmelteils befestigt sind. Der Profilteil ist so ausgestaltet, damit er genau in die Rille der beiden gegenseitig anliegenden Profilleisten einsinkt.

Im oberen Teil der Dachhimmelverbindung ist an einer der Profilleisten mindestens ein Schlitz und an der anderen anliegenden Profilleiste mindestens ein in den Schlitz eingreifender Vorsprung ausgebildet. Dieser Schlitz und Vorsprung sind in der Normalrichtung zum Verlauf der durch den Profilteil und die Rille der Profilleiste gebildeten Formverbindung ausgestaltet.

Von oben weisen die Profilleisten solche Abkantungen auf, damit beide Abkantungen nach dem Einbau jeweils an der gegenüberliegenden Seite sind und eine gemeinsame Einsenkung in beiden Leisten bilden.

### Übersicht der Figuren der Zeichnungen

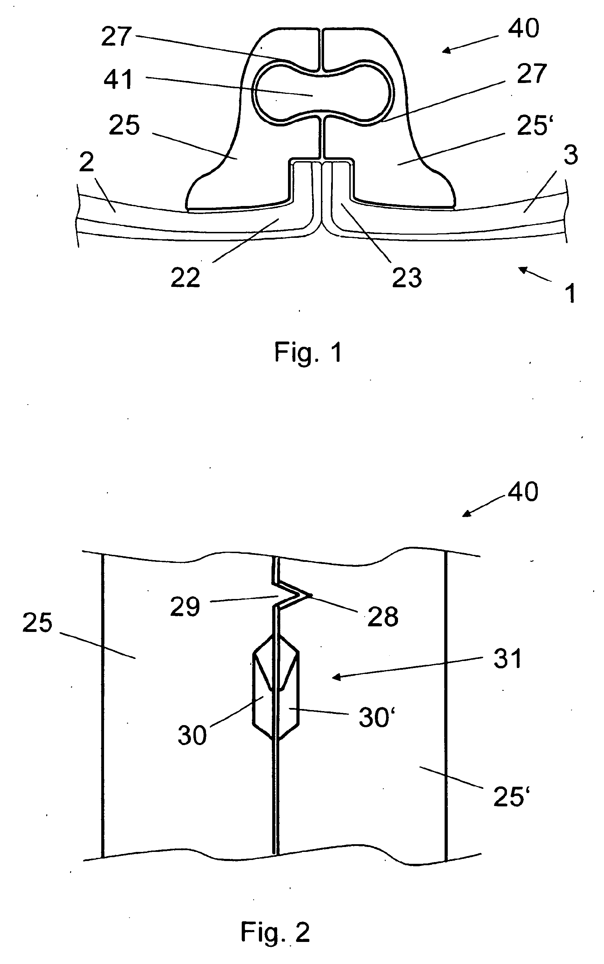

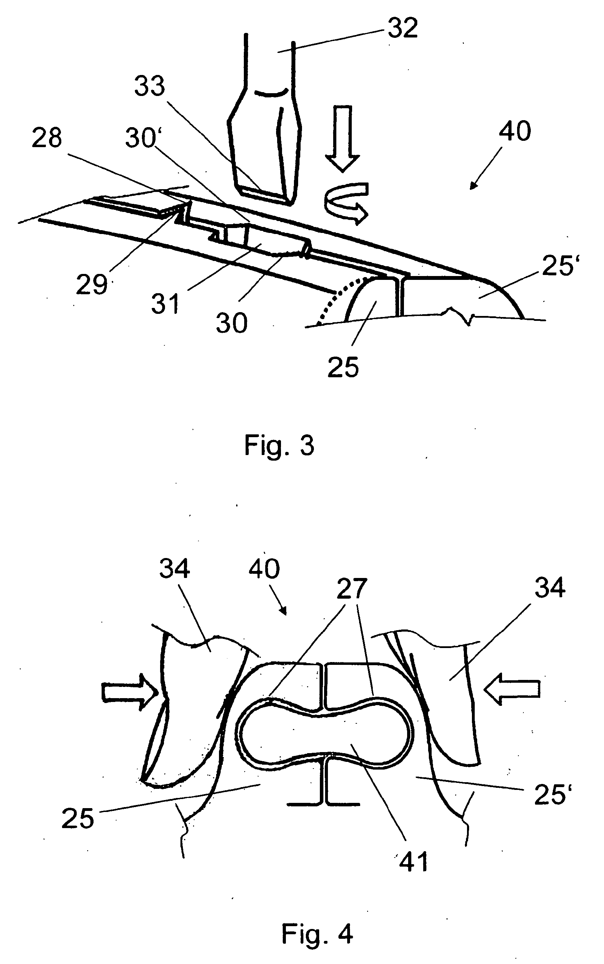

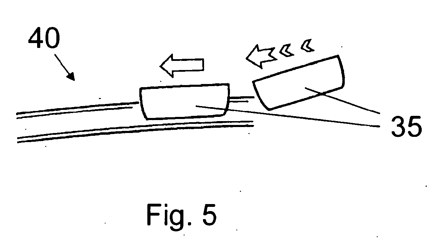

In der Fig. 1 ist in einer Queransicht die Verbindung der Dachhimmelteile mit den Profilleisten, in Fig. 2 die Verbindung der Dachhimmelteile mit Profilleisten in einer Draufsicht, in Fig. 3 die Entkopplung der Leisten durch Einschieben der Vorrichtung, in Fig. 4 die Verbindung der Profilleisten mit Händedruck in der Gegenrichtung, in Fig. 5 die Aufsetzung eines speziellen Reiters auf die Profilleisten dargestellt.

### Ausführungsbeispiel der Erfindung

Üblicher Dachhimmel, in der Regel als einteilig ausgestaltet, ist im Karosserieinnenraum durch umliegende Einbauteile befestigt (die Sonnenblenden, der Rahmen der vorderen Mittelleuchte, die Dachgriffe, der Clip oder ähnliches Befestigungselement, z.B. Dual Lock, bzw. Klettverschluss im hinteren Bereich). Der Dachhimmel ist seitlich und im hinteren Bereich in die Dichtung eingezogen und vorne, seitlich und hinten knüpfen die oberen Säulenverkleidungen an. Bei der Fahrzeugvariante mit Ausstell- bzw. Schiebedach kann der Dachhimmel auch eben im Bereich der Anbindung des Dachhimmels an den Ausstell-/Schiebedachmodul befestigt werden.

Der Dachhimmel 1 wird längs zur Fahrtrichtung mindestens auf zwei Teile aufgeteilt. In einer vorteilhaften Ausführung wird er in zwei erste (seitliche, spiegelbildlich identische) Dachhimmelteile 2 und einen Mittelteil 3 aufgeteilt. Die Trennlinien zwischen einzelnen Teilen 2, 3 werden im Bereich des Einbaues der Sonnenblende geführt und verlaufen um die Dachgriffe bis zum hinteren Teil des Dachhimmels. Nach der Aufteilung des Bauteils können alle seine Teile 2, 3 als separate, selbsttragende und unabhängige, evtl. auch getrennt ein- oder ausbaubare Teile angesehen werden. Der erste Seitenteil 2 ist an der Karosserieinnenseite im Bereich des Dachgriffes und der Sonnenblende, eventuell auch im hinteren Bereich des Dachhimmels (nicht abgebildet) befestigt. Der zweite Mittelteil 3 ist an der Karosserieinnenseite im Bereich der Sonnenblende und des Rahmens der vorderen Mittelleuchte sowie im hinteren Bereich (nicht abgebildet) befestigt.

Die Teile 2 und 3 des Dachhimmels 1 sind konstruktiv derart ausgestaltet, damit sie separat hergestellt werden können.

Die Teile 2 und 3 des Dachhimmels 1, nach Fig. 2, weisen an der Anbindungsstelle ausgebildete Säume 22, 23 auf. Der erste Teil 2 weist einen Rand 22 und der zweite Teil 3 den Rand 23 auf, wobei beide Ränder 22, 23 derart ausgestaltet sind, damit sie aneinander anliegen und gegenseitig passen. Im Anbindungsbereich ist an der Rückseite des Dachhimmels 1 eine Dachhimmelverbindung 40 ausgebildet, die für eine gegenseitige, zerlegbare Verbindung dieser Dachhimmelteile 2, 3 dient.

Die Verbindung 40 beider Teile 2, 3 des Dachhimmels 1, nach Fig. 1, besteht aus beiderseitig verwendbarer Profilleiste 25, 25' und zwar so, dass sie spiegelbildlich doppelt verwendet wird.

Diese Leiste 25 und 25' ist von der (beim eingebauten Dachhimmel unsichtbaren) Rückseite des Dachhimmels 1 an Rändern 22, 23 der zu verbindenden Teile 2 und 3 an der Anbindungsstelle aneinander befestigt. Sie bildet also mit den Teilen 2, 3 eine nicht zerlegbare Einheit und verstärkt darüber hinaus diese Teile 2, 3 des Dachhimmels 1 im Bereich des Saumes. Eine Ausführung der Profilleiste 25 ist zum Rand 22 des ersten Dachhimmelteils 2 und die zweite spiegelbildliche Ausführung der Profilleiste 25' zum Rand 23 des zweiten Dachhimmelteils 3 befestigt. Die Befestigung der Profilleisten 25 und 25' zu den Dachhimmelteilen 2, 3 kann durch Kleben, Aufpressen, Schweißen u. ä. oder in Kombination dieser Verfahren erfolgen. Die Profilleisten 25, 25' sind formgemäß identisch ausgeführt, was folglich die Fertigung vereinfacht und verbilligt, d.h. es wird nur eine beiderseitig verwendbare Leiste geben.

Die Positionen der Profilleisten 25 und 25' an den Dachhimmelteilen 2, 3 des Dachhimmels 1 müssen eine gegenseitige Verbindung ermöglichen. Als Verbindungsart wurde hier die Formverbindung auf dem Prinzip Feder/Nut ausgestaltet. Beide Ausführungen der Profilleiste 25, 25' weisen eine Rille 27 auf. Die Dachhimmelverbindung 40 umfasst auch ein Profilteil 41, der formgemäß genau in die. Rille 27 der beiden Ausführungen der Profilleiste 25, 25' passt. Beide Formelemente, dh. der Profilteil 41 sowie die Rille 27, sind in der Längsrichtung entlang der ganzen Länge der Profilleisten 25, 25' ausgebildet. Dadurch ist eine genaue gegenseitige Position der beiden zu verbindenden Teile 2, 3 definiert und gewährleistet.

Gegen eventuelle Verschiebung beider Teile 2, 3, die bereits durch die der Rückseite des Dachhimmels entsprechende Form der Leiste im wesentlichen eingeschränkt wird, ist im oberen Teil der Dachhimmelverbindung 40, nach Fig.2, an einer der Profilleisten 25, 25' mindestens ein Schlitz 28 und der anderen anliegenden Leiste (25, 25') mindestens ein Vorsprung 29 ausgebildet, der in den Schlitz 28 eingreift. Der Schlitz 28 und der Vorsprung 29 sind in der Normalrichtung zum Verlauf der Formverbindung ausgestaltet, die durch den Profilteil 41 und die Rille 27 der Profilleisten 25, 25' gebildet wird.

Die Profilleiste 25, 25' weist, gemäß Fig. 2 und 3, bei beiden Ausführungen oben mindestens eine Abkantung 30, 30' derart auf, damit beide Abkantungen 30, 30' nach dem Zusammenbau des Dachhimmels 1 jeweils an gegenüberliegenden Seiten sind und eine gemeinsame Einsenkung 31 in beiden Leisten 25, 25' bilden. Die Einsenkung 31 hat die Form einer Keilrille. Die Abkantungen 30, 30' werden nach Bedarf nur an einigen Stellen in der Längsrichtung mit entsprechendem Abstand untereinander ausgebildet. Die Länge der Abkantung 30, 30' ist derart ausgestaltet, damit diese das Einsetzen der Spitze 33 der Vorrichtung 32 oder der Spitze des Schraubers in die Keilrille der Einsenkung 31 ermöglicht.

Die Entkopplung nach Fig. 3 erfolgt durch das Einsetzen der Spitze 33 der Vorrichtung 32 oder des Schraubers in die Einsenkungen 31 in beiden Leisten 25, 25' und nachfolgende Drehung der Spitze in der Einsenkung 31 um den zur Entkopplung der einzelnen Leisten 25, 25' sowie einzelner Dachhimmelteile 2, 3 unbedingt erforderlichen Winkel.

Die Verbindung der getrennten Dachhimmelteile 2, 3 erfolgt durch den gegenseitigen in der Gegenrichtung wirkenden Druck auf die Formleisten 25, 25'. Der Druck auf die Formleisten 25, 25 wird entweder durch die Finger 34 der Hand (Fig. 5), evtl. durch einen speziellen, als Formmuffe (Fig. 4, 5) ausgestalteten Reiter 35 bzw. durch Zangen an mehreren Stellen der Verbindung derart entwickelt, dass eine sichere Verbindung entlang der ganzen Länge des Dachhimmels 1 erzielt wird.

Die Einsenkung 31 kann auch nur mit einer Abkantung 30, 30' derart ausgestaltet sein, dass die Abkantung 30, 30' nur an einer Ausführung der Leiste 25, 25' ausgebildet wird. Dem ist auch die Spitze 33 der. Vorrichtung 32 bzw. des Schraubers angepasst. Bei dieser Ausführung kann jedoch durch die Nutzung eine Beschädigung der gegenüberliegenden Kante der zweiten Leiste 25, 25' auftreten, bei der die Abkantung 30, 30' nicht ausgestaltet ist.

Der mehrteilige zerlegbare Dachhimmel 1 wird direkt vom Hersteller im zusammengebauten Zustand angeliefert, also als eine Einheit mit gegenseitig verbundenen Teilen. Als eine Einheit wird er über die Öffnung der Frontscheibe ins Fahrzeug eingelegt und an die Karosserieinnenseite eingebaut. Angesichts der konstruktiven und insbesondere Design- und Farbgestaltung können die Dachhimmelteile einzeln geliefert und knapp vor dem Fahrzeugeinbau verbunden werden.

Bei Herausnahme des Dachhimmels aus dem Fahrzeug mit eingebauter Frontscheibe wird der Dachhimmel aus seiner Position in Karosserieinnenraum ausgebaut. Nach dem beschriebenen Ablauf werden die einzelnen Teile entkoppelt und beim Bedarf auch aus dem Fahrzeug herausgenommen. Der nachfolgende Einbau erfolgt durch die Einlegung der entkoppelten Teile in das Fahrzeug, deren gegenseitige Verbindung anhand des beschriebenen Verfahrens und abschließende Befestigung an der Karosserieinnenseite.

Die konstruktive Gestaltung ermöglicht so den wiederholten Einbau bzw. Ausbau durch die Verbindung bzw. Entkopplung der einzelnen Teile des Dachhimmels ohne derer Beschädigung.

### Industrielle Nutzbarkeit

Die erfindungsgemäße Dachhimmelverbindung eines Fahrzeugs kann in allen Automobilen eingesetzt werden, insbesondere dann bei Personenkraftfahrzeugen, wo die konstruktiven Möglichkeiten die Herausnahme eines ungeteilten Dachhimmels über die Heckklappe oder Seitentüren ohne notwendigen Ausbau der Fahrzeugfrontscheibe nicht erlauben und deshalb vorteilhaft der mehrteilige, zerlegbare Dachhimmel einschl. der Verbindung der einzelnen Teile des Dachhimmels verwendet werden kann.

### Verwendete Bezeichnungen

- 1: Fahrzeugdachhimmel
- 2: erster Dachhimmelteil
- 3: zweiter Dachhimmelteil
- 40: Dachhimmelverbindung
- 41: Profilteil
- 22: Rand des ersten Teils
- 23: Rand des zweiten Teils
- 25, 25': Profilleiste
- 27: innere Rille der Profilleiste 25, 25'
- 28: Schlitz der Profilleiste
- 29: Vorsprung der Profilleiste
- 30,30': Abkantung der Profilleiste
- 31: Einsenkung der Profilleisten
- 32: Vorrichtung (Schrauber)
- 33: Spitze der Vorrichtung (des Schraubers)
- 34: Finger der Hand
- 35: Reiter

## Patentansprüche

1. Die Dachhimmelverbindung (40) des Fahrzeugdachhimmels (1), der aus mindestens zwei Dachhimmelteilen (2, 3) besteht, wo jeder der Teile (2, 3) des Dachhimmels (1) separat selbsttragend und zerlegbar im Fahrzeuginnenraum zum Karosseriedachteil befestigt werden kann, die an Rändern (22, 23) der Dachhimmelteile (2, 3) im Anbindungsbereich der anliegenden Dachhimmelteile (2, 3) von der beim eingebauten Dachhimmel (1) unsichtbaren Rückseite des Dachhimmels (1) ausgebildet ist, **dadurch gekennzeichnet, dass** die Dachhimmelverbindung'(40) durch:
beiderseitig verwendbare Profilleiste (25, 25'), die eine Rille (27) aufweist, wobei die Profilleiste (25, 25') in der Verbindung (40) spiegelbildlich doppelt derart verwendet wird, dass die Profilleiste (25) zum Rand (22) des ersten Dachhimmelteils (2) und die Profilleiste (25') zum Rand (23) des zweiten Dachhimmelteils (3) befestigt ist;
einen Profilteil (41), der für genaue Einsenkung in die Rille (27) der beiden gegenseitig anliegenden Profilleisten (25, 25') ausgestaltet ist, gebildet wird.

2. Die Dachhimmelverbindung (40) nach Anspruch 1 **dadurch gekennzeichnet, dass** im oberen Teil der Dachhimmelverbindung (40) an einer der Profilleisten (25, 25') mindestens ein Schlitz (28) und an der anderen anliegenden Profilleiste (25, 25') mindestens ein in den Schlitz (28) eingreifender Vorsprung (29) ausgebildet ist, wobei der Schlitz (28) und der Vorsprung (29) in der Normalrichtung zum Verlauf der Formverbindung ausgestaltet sind, die durch den Profilteil (41) und die Rille (27) der Profilleiste (25, 25') gebildet wird.

3. Die Dachhimmelverbindung (40) nach der vorherigen Ansprüche **dadurch gekenntzeichnet, dass** von oben die Profilleiste (25, 25') an jeder Seite
mindestens eine Abkantung (30, 30') derart aufweist, dass die Abkantungen (30, 30') nach dem Zusammenbau des Dachhimmels (1) sich jeweils an gegenüberliegenden Seiten befinden und so eine gemeinsame Einsenkung (31) in beiden Leisten (25, 25') bilden.

## Claims

1. Roof liner connection (40) for the vehicle roof liner (1) which consists of at least two roof liner parts (2, 3), where each of the parts (2, 3) of the roof liner (1) can be fastened to the body roof part in the vehicle interior in a separately self-supporting and dismantleable manner, said roof liner connection being formed at edges (22, 23) of the roof liner parts (2, 3) in the connection region of the adjacent roof liner parts (2, 3) from the rear side of the roof liner (1), the rear side being invisible when the roof liner (1) is installed, **characterized in that** the roof liner connection (40) is formed by:
a profile strip (25, 25') which is usable on both sides and has a groove (27), wherein the profile strip (25, 25') is used in mirror-inverted, duplicate form in the connection (40) in such a manner that the profile strip (25) is fastened to the edge (22) of the first roof liner part (2) and the profile strip (25') is fastened to the edge (23) of the second roof liner part (3);
and a profile part (41) which is configured for precise recessing into the groove (27) of the two mutually adjacent profile strips (25, 25').

2. Roof liner connection (40) according to Claim 1, **characterized in that**, in the upper part of the roof liner connection (40), at least one slot (28) is formed on one of the profile strips (25, 25') and at least one projection (29) engaging in the slot (28) is formed on the other adjacent profile strip (25, 25'), wherein the slot (28) and the projection (29) are configured in the normal direction with respect to the profile of the shaped connection which is formed by the profile part (41) and the groove (27) of the profile strip (25, 25').

3. Roof liner connection (40) according to the preceding claims, **characterized in that** the profile strip (25, 25') has at least one bevel (30, 30') on each side from above in such a manner that, after the roof liner (1) is assembled, the bevels (30, 30') are both located on opposite sides and thus form a common recess (31) in the two strips (25, 25').

## Revendications

1. Jonction de garniture de plafond (40) de la garniture de plafond de véhicule (1) composée d'au moins deux parties de garniture de plafond (2, 3), dans laquelle chacune des parties (2, 3) de la garniture de plafond (1) peut être fixée séparément de façon autoportante et démontable dans l'habitacle du véhicule par rapport à la partie de toit de carrosserie réalisée au niveau des bordures (22, 23) des parties de garniture de plafond (2, 3), dans la zone de raccordement des parties de garniture de plafond (2, 3) connexes en partant du côté arrière invisible, lorsque la garniture de plafond (1) est encastrée, de la garniture de plafond (1), **caractérisé en ce que** la jonction de garniture de plafond (40) est formée par :
une baguette de profilé (25, 25') utilisable des deux côtés et comportant un sillon (27), la baguette de profilé (25, 25') placée dans la jonction (40) étant utilisée de telle sorte en double utilisation en miroir que la baguette de profilé (25) est fixée à la bordure (22) de la première partie de garniture de plafond (2) et que la baguette de profilé (25') est fixée à la bordure (23) de la deuxième partie de garniture de plafond (3) ;
une partie de profilé (41) configurée pour pénétrer précisément dans le sillon (27) des deux baguettes de profilé (25, 25') mutuellement connexes.

2. Jonction de garniture de plafond (40) selon la revendication 1, **caractérisé en ce que** au moins une fente (28) est prévue dans la partie supérieure de la jonction de garniture de plafond (40) au niveau d'une des baguettes de profilé (25, 25') et qu'au moins une saillie (29) s'imbriquant dans la fente (28) est réalisée au niveau de l'autre baguette de profilé (25, 25') connexe, la fente (28) et la saillie (29) étant réalisées dans la direction perpendiculaire à la courbe de la jonction de forme formée par la partie de profilé (41) et le sillon (27) de la baguette de profilé (25, 25').

3. Jonction de garniture de plafond (40) selon les revendications précédentes, **caractérisé en ce que** la baguette de profilé (25, 25') comporte en haut au moins un chanfrein (30, 30') au niveau de chaque côté de telle sorte que les chanfreins (30, 30') se placent respectivement contre les côtés opposés après assemblage de la garniture de plafond (1) et forment ainsi un renfoncement (31) commun dans les deux baguettes (25, 25').
